# EUROPÄISCHE PATENTSCHRIFT

(11) **EP 1 279 532 B1**
(45) Veröffentlichungstag und Bekanntmachung des Hinweises auf die Patenterteilung: **07.12.2005**
(21) Anmeldenummer: 02007607.1
(22) Anmeldetag: 04.04.2002
(51) Int. Cl.: B60H 1/34

(54) **Luftdüse**
Air outlet
Bouche d'air

(30) Priorität: 26.07.2001 DE 10136636
(43) Veröffentlichungstag der Anmeldung: 29.01.2003
(73) Patentinhaber: HAPPICH Fahrzeug- und Industrieteile GmbH, 42285 Wuppertal (DE)
(72) Erfinder: Celik, Fahri, 42283 Wuppertal (DE)

(56) Entgegenhaltungen:
- EP-A- 0 810 112
- GB-A- 2 100 418
- GB-A- 2 129 119
- US-A- 4 699 322
- US-A- 5 364 303

## Beschreibung

Die Erfindung bezieht sich auf eine Luftdüse, insbesondere für Fahrzeuge, mit Achszapfen aufweisenden Luftklappen, einem Koppelglied für die Luftklappen, einem Aufnahmen für die Achszapfen aufweisenden ringförmigen Innengehäuse und einem das Innengehäuse drehbeweglich und axial gesichert aufnehmenden ringförmigen Außengehäuse.

Luftdüsen für Fahrzeuge sind in den verschiedensten Ausführungsformen bekannt. Bei Luftdüsen mit Luftklappen, auf die die Erfindung abzielt, liegen die Luftklappen im geschlossenen Zustand schuppenartig übereinander, während sie im geöffneten Zustand fächerartig zueinander stehen. Luftdüsen dieser Art werden z. B. in Armaturentafeln eingesetzt oder praktisch überall dort im Fahrzeug, wo eine Belüftung erwünscht und ein Luftkanal vorhanden ist.

Zum Stand der Technik sei dazu beispielhaft auf die EP-A-0 810 112 verwiesen. Die aus dieser Druckschrift bekannte Anordnung bezieht sich auf eine Luftdüse zum Verteilen, Ausrichten, regulieren und Sperren eines Luftstroms für Fahrzeuge. Diese Luftdüse umfasst dabei einen hohlen zylindrischen Körper, welcher in einem kreisförmigen Auslass endet, wobei zwei frontseitige Luftklappen vorgesehen sind, die von einem rotierbaren Ring getragen werden, so dass diese verschwenkt werden können, wobei diese unter einander verbunden sind, um parallel zueinander zwischen zwei Endpositionen rotiert zu werden , und zwar zwischen einer Position, in der sie eine Planebene bilden und derart miteinander zusammen wirken, dass die Auslassöffnung vollständig verschlossen wird, und einer zweiten Position, in der die Auslassöffnung vollständig geöffnet wird. Die Luftklappen können dabei zwischen diesen beiden Positionen variabel verstellt werden, und zwar parallel zueinander stehend, weiterhin kann, in senkrechter Ebene dazu, durch eine Verdrehung des Innengehäuses ein unterschiedlicher Winkel für den Luftstrom eingestellt werden. Die Einstellung des Luftstroms erfolgt also durch Rotation des Innengehäuses in dem zylindrischen Hohlkörper, wobei eine Verschwenkung der beiden Luftklappen durch eine in einer dafür vorgesehenen Aushöhlung in dem Hohlkörper vorgesehenen Ventilanordnung erfolgt, um den durch diese Aushöhlung durchdringenden Luftstrom hermetisch zu regulieren bzw. zu blockieren. Es soll durch eine derartige Anordnung insbesondere eine begrenzte Anzahl von Bauteilen erreicht werden, die sich in einer schnappverbindungsartigen Weise zusammen setzen lassen und dadurch sehr geringe Herstellungs- und Montagekosten verursachen, außerdem soll durch diese Anordnung eine ästhetische Erscheinung sowie auch ein annehmbares Gewicht verwirklicht werden.

Die herkömmlichen, aus dem Stand der Technik oder durch offenkundige Vorbenutzung bekannt gewordenen Luftdüsen haben alle miteinander gemeinsam, dass sie in der Herstellung, insbesondere aber auch in der Montage, womit der Zusammenbau der Luftdüseneinzelteile gemeint ist, aufwendig und infolgedessen recht teuer und somit insgesamt verbesserungswürdig sind.

Der vorliegenden Erfindung liegt demgemäss die Aufgabe zugrunde, der Abnehmerschaft eine besonders einfach herzustellende und zu montierende Luftdüse, die insbesondere auch preiswert ist, zur Verfügung zu stellen.

Die Aufgabe wird erfindungsgemäß dadurch gelöst, dass die Aufnahmen für die Achszapfen als an dem Innengehäuse angeordnete, hinterschnittene Steckaufnahmen für die Achszapfen ausgebildet sind, dass das Außengehäuse zur Befestigungsanordnung an eine gelochte Anschlusswand einen sich außenseitig an der Anschlusswand abstützenden Flansch und im Ringmantel freigesparte, den Lochrand der Anschlusswand hintergreifende elastisch angebundene Klipsnasen aufweist, und dass das Außengehäuse (1) weiterhin mit einem nach innen gerichteten Kragen an dem das Innengehäuse einendig anliegt sowie mit wegspreizbaren Anschlägen versehen ist, die das Innengehäuse nach erfolgter Steckmontage am anderen Ende hintergreifen und axial sichern.

Die besonderen Vorteile der erfindungsgemäßen Luftdüsen sind in der Montageerleichterung und Montagezeitersparnis gegenüber den bekannten Vorbildern zu sehen.

Vorteilhafte Weiterbildungen und zweckmäßige Ausgestaltungen der Erfindung sind in den Unteransprüchen angegeben.

Ein Ausführungsbeispiel der Erfindung wird im folgenden anhand der Zeichnungen näher erläutert, und es zeigen:
- Fig. 1: die Luftdüse in einer perspektivischen Explosivdarstellung,
- Fig. 2: die Luftdüse in Seitenansicht,
- Fig. 3: die Luftdüse in Draufsicht und
- Fig. 4: einen Schnitt A - A nach Fig. 2.

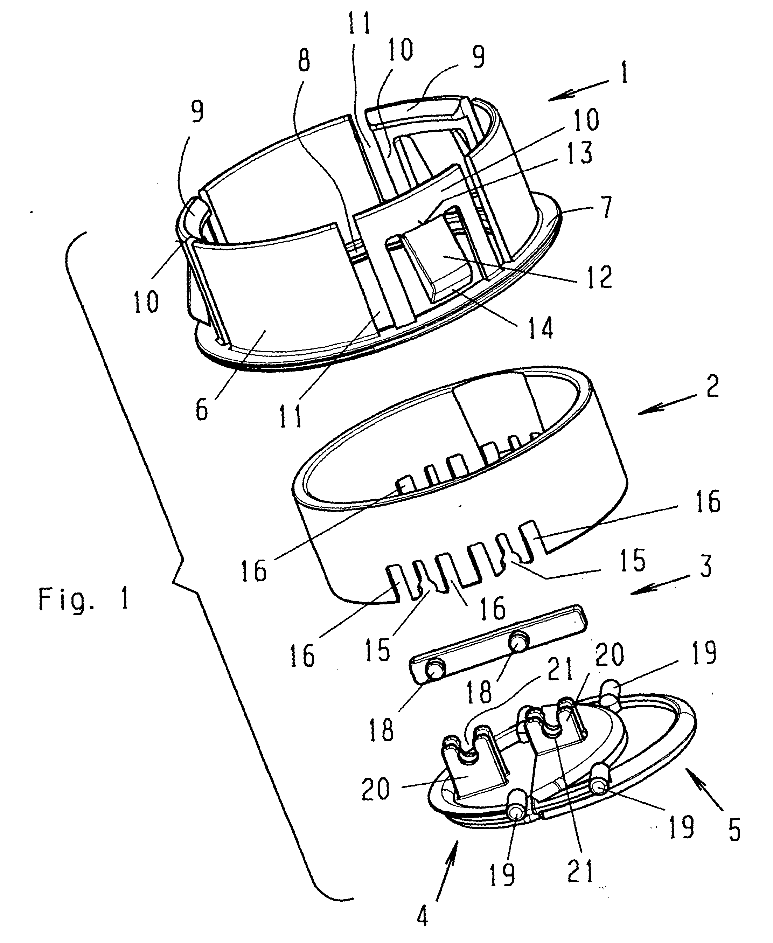

Die neue Luftdüse besteht gemäß Fig. 1 von oben nach unten gesehen aus einem Außengehäuse 1, einem Innengehäuse 2, einem Koppelglied 3 und zwei Luftklappen 4 und 5.

Das Außengehäuse 1 ist ringförmig ausgebildet und weist einen Ringmantel 6 auf, der an einem Axialende durch einen nach außen gerichteten Flansch 7 und durch einen nach innen gerichteten Kragen 8 begrenzt ist. Am anderen Ende des Außengehäuses 1 sind nach innen gerichtete Anschläge 9 vorgesehen, die an Materialzungen 10 angeordnet sind, welche gebildet sind durch Schlitze 11, die sich axial ausgehend vom Flansch 7 frei auslaufend erstrecken.

In jeder Materialzunge 10 ist jeweils durch eine U-förmige Freisparung eine Klipsnase 12 ausgebildet, deren als Schwenkachse dienende Wurzel 13 jeweils einem Anschlag 9 benachbart ist und deren verdickter Kopf 14 jeweils dem Flansch 7 zugewandt ist. Durch die Schlitze 11 und die U-förmigen Freisparungen können die Materialzungen 10 und damit auch die Anschläge 9 nach außen gespreizt werden, während die Wurzeln 13 der Klipsnasen 12 ein Einschwenken der Klipsnasen 12 in das Außengehäuseinnere ermöglichen.

Das Außengehäuse 1 dient zur drehbeweglichen Aufnahme des ringförmig ausgebildeten Innengehäuses 2, welches sich in der montierten Lage einendig am Kragen 8 und anderendig an den Anschlägen 9 des Außengehäuses 1 abstützt. Das Innengehäuse 2 weist hinterschnittene Stecköffnungen 15 als Lageraufnahmen auf, die den Innengehäusemantel durchsetzen, nach hinten verlängert und beidseitig von Schlitzen 16 flankiert sind, um eine gewisse Aufspreizbarkeit der Stecköffnungsstege 17 zu ermöglichen. Die Stecköffnungen 15 gehen ebenso wie die Schlitze 16 von einem Axialende des Innengehäuses 2 aus und erstrecken sich über einen axialen Teilbereich des Innengehäuses 2. Die Anzahl der Stecköffnungen 15 richtet sich nach der Anzahl der Luftklappen 4, 5, wobei für jede Luftklappe 4, 5 jeweils zwei einander gegenüberliegende Stecköffnungen vorzusehen sind.

Das Koppelglied weist eine Leistenform auf und ist an zumindest einer Breitseite, bevorzugt aber an beiden Breitseiten mit Zapfen 18 ausgebildet, die aus der Leistenebene hervorstehen.

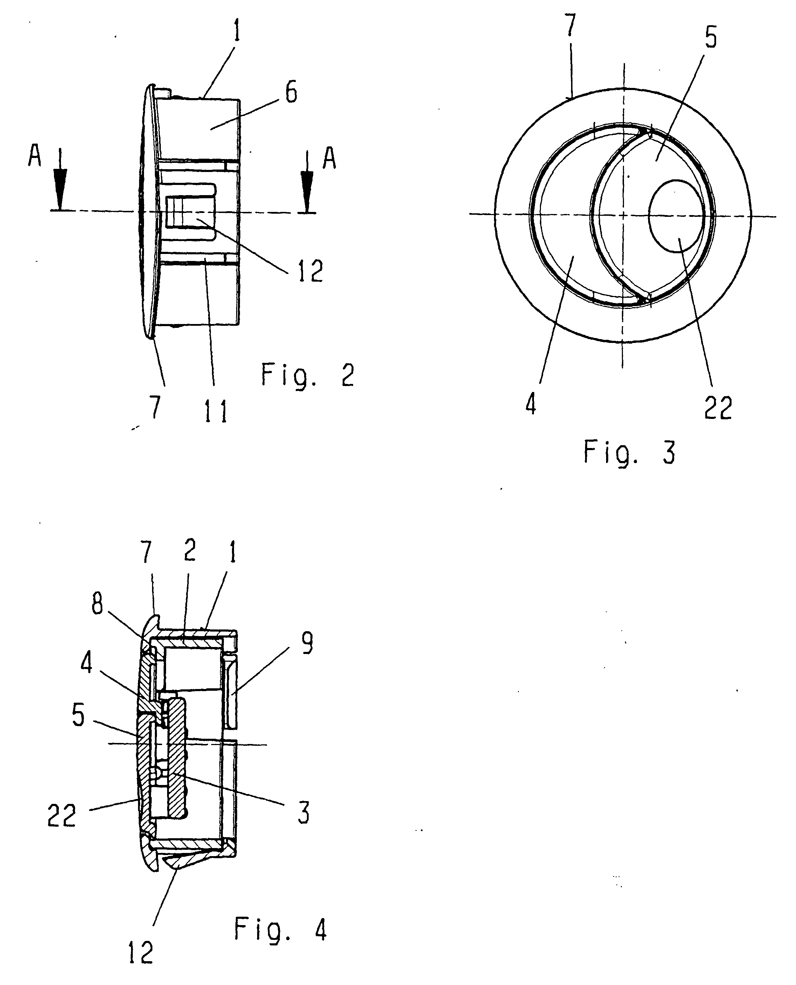

Die Luftklappen 4, 5, die etwa sichelförmig gestaltet sind, überlappen sich bereichsweise schuppenartig und bilden im aufeinanderliegenden Zustand, der gleich mit dem geschlossenen Zustand der Luftdüsen ist, einen Vollkreis, wie in Fig. 3 gezeigt. Jede Luftklappe 4 und 5 weist auf einer gemeinsamen Achse liegende, seitlich überstehende Achszapfen 19 auf, die dazu bestimmt sind, in zwei einander gegenüberliegende Stecköffnungen 15 des Innengehäuses 2 eingeschnäppert zu werden, um verschwenkt werden zu können. Damit das Verschwenken mehrerer Luftklappen 4, 5 synchron verläuft und sich die Luftklappen 4, 5 fächerartig öffnen lassen, ist das Koppelglied 3 vorgesehen, für dessen Lagerung jede Luftklappe 4, 5 rückseitig angeordnete Materialansätze 20 mit hinterschnittenen Lageraufnahmen 21 zur Steckmontage der am Koppelglied 3 angeordneten Zapfen 18 aufweist. Dabei ist bevorzugt vorgesehen, dass die Materialansätze 20 jeweils gabelartig ausgebildet sind und dass das Koppelglied zwischen den Gabelzinken angeordnet ist. Die Luftklappen 4, 5 bilden aufeinanderliegend eine plane Außenflächen, wozu die eine bereichsweise verdünnt und die andere eine den verdünnten Bereich aufnehmende Vertiefung aufweist.

Die Luftklappe 5 weist eine kleine Vertiefung 22 auf, die als Betätigungshandhabe dient und vom Finger einer menschlichen Hand beaufschlagt werden kann um die Luftdüse zu öffnen. Das Schließen erfolgt dann durch Fingerdruck am freien Rand einer der Luftklappen 4, 5. Die Luftklappen 4, 5 lassen sich mehr oder weniger weist je nach Belieben des Benutzers öffnen, wie auch der Luftstrom durch Drehen des Innengehäuses 2 im Außengehäuse 1 gelenkt werden kann, wobei zum Drehen eine der Luftklappen 4, 5 als Handhabe benutzt werden kann. Da die Luftklappen 4, 5 einen Vollkreis bilden, wird der gesamte Öffnungsquerschnitt des Innengehäuses zur Luftversorgung genutzt.

Die Einzelteile der neuen Luftdüse bestehen aus einfach und kostengünstig herzustellenden Kunststoff-Spritzgussteilen, die insbesondere auch schnell und einfach zu montieren sind. Zur Montage werden die Luftklappen 4, 5, wie aus Fig. 1 unten ersichtlich aufeinandergelegt (erster Schritt), die Luftklappen 4, 5 durch Aufklipsen des Koppelglieds 3 miteinander verbunden, wobei die Zapfen 18 in die Lageraufnahmen 21 eingeschnäppert werden (zweiter Schritt), das Innengehäuse 2 mit den Stecköffnungen 15 voran auf die Luftklappen 4, 5 gesetzt, wobei die Achszapfen 19 in die Stecköffnungen 15 eingeschnäppert werden (dritter Schritt), wonach die aus Innengehäuse 2, Koppelglied 3 und Luftklappen 4, 5 bestehende Einheit in das Außengehäuse 1 von der Seite der Anschläge 9 her eingesetzt wird, wobei die Anschläge 9 zurückreichen, um das Innengehäuse 2 nach erfolgter Passage zu hinterfassen (vierter Schritt).

## Patentansprüche

1. Luftdüse, insbesondere für Fahrzeuge, mit Achszapfen (19) aufweisenden Luftklappen (4, 5), einem Koppelglied (3) für die Luftklappen (4, 5), einem Aufnahmen für die Achszapfen (19) aufweisenden ringförmigen Innengehäuse (2) und einem das Innengehäuse (2) drehbeweglich und axial gesichert aufnehmenden ringförmigen Außengehäuse (1), **dadurch gekennzeichnet, dass** die Aufnahmen für die Achszapfen (19) als an dem Innengehäuse (2) angeordnete, hinterschnittene Steckaufnahmen (15) für die Achszapfen (19) ausgebildet sind, dass das Außengehäuse (1) zur Befestigungsanordnung an eine gelochte Anschlusswand einen sich außenseitig an der Anschlusswand abstützenden Flansch (7) und im Ringmantel (6) freigesparte, den Lochrand der Anschlusswand hintergreifende elastisch angebundene Klipsnasen (12) aufweist, und dass das Außengehäuse (1) weiterhin mit einem nach innen gerichteten Kragen (8) an dem das Innengehäuse (2) einendig anliegt sowie mit wegspreizbaren Anschlägen (9) versehen ist, die das Innengehäuse (2) nach erfolgter Steckmontage am anderen Ende hintergreifen und axial sichern.

2. Luftdüse nach Anspruch 1, **dadurch gekennzeichnet, dass** die sich bereichsweise überlappenden Luftklappen (4, 5) miteinander einen geschlossenen Kreis bilden.

3. Luftdüse nach Anspruch 1 oder 2, **dadurch gekennzeichnet, dass** die Luftklappen (4, 5) rückseitig angeordnete Materialansätze (20) mit hinterschnittenen Lageraufnahmen (21) zur Steckmontage von am Koppelglied (3) angeordneten Zapfen (18) aufweisen.

4. Luftdüse nach Anspruch 3, **dadurch gekennzeichnet, dass** die Materialansätze (20) jeweils gabelartig ausgebildet sind und dass das Koppelglied (3) zwischen den Gabelzinken angeordnet ist.

5. Luftdüse nach wenigstens einem der vorausgegangenen Ansprüche, **dadurch gekennzeichnet, dass** die im Innengehäuse (2) ausgebildeten hinterschnittenen Stecköffnungen (15), die für eine Steckmontage der Luftklappen-Achszapfen (19) vorgesehen sind, von einem Axialende des Innengehäuses (2) her ausgehen und sich über einen axialen Teilbereich des Innengehäuses (2) erstrecken.

6. Luftdüsen nach Anspruch 5, **dadurch gekennzeichnet, dass** die Stecköffnungen (15) den Innengehäusemantel durchsetzen und von den Innengehäusemantel ebenfalls durchsetzende Schlitze (16) flankiert werden, so dass eine vereinfachte Steck-Klips-Montage ermöglicht wird.

7. Luftdüse nach den Ansprüchen 1 bis 6, **dadurch gekennzeichnet, dass** die Einzelteile derselben aus Kunststoff-Spritzgussteilen bestehen und durch Klipsrastung miteinander verbunden sind.

## Claims

1. Air nozzle, in particular for vehicles, having air flaps (4, 5) which have axle journals (19), a coupling member (3) for the air flaps (4, 5), an annular inner housing (2) which has receptacles for the axle journals (19), and an annular outer housing (1) which holds the inner housing (2) in a rotationally movable and axially secured manner, **characterized in that** the receptacles for the axle journals (19) are configured as undercut socket holders (15) for the axle journals (19), which socket holders (15) are arranged on the inner housing (2), **in that** the outer housing (1), for the fastening arrangement to a perforated connecting wall, has a flange (7) which is supported on the connecting wall on the outside and elastically connected clip lugs (12) which are cut out in the annular cover (6) and engage behind the perforated edge of the connecting wall, and **in that**, furthermore, the outer housing (1) is provided with an inwardly oriented collar (8), with which the inner housing (2) is in contact at one end, and with stops (9) which can be spread away, engage behind the inner housing (2) after plug-in assembly has been completed at the other end, and secure the said inner housing (2) axially.

2. Air nozzle according to Claim 1, **characterized in that** the air flaps (4, 5) which overlap in regions form a closed circle with one another.

3. Air nozzle according to Claim 1 or 2, **characterized in that** the air flaps (4, 5) have material projections (20) which are arranged on the rear side and have undercut bearing holders (21), for the plug-in assembly of journals (18) which are arranged on the coupling member (3).

4. Air nozzle according to Claim 3, **characterized in that** the material projections (20) are in each case of fork-like configuration, and **in that** the coupling member (3) is arranged between the fork prongs.

5. Air nozzle according to at least one of the preceding claims, **characterized in that** the undercut plug-in openings (15) which are configured in the inner housing (2) and are provided for the plug-in assembly of the air-flap axle journals (19) emanate from one axial end of the inner housing (2) and extend over an axial partial region of the inner housing (2).

6. Air nozzle according to Claim 5, **characterized in that** the plug-in openings (15) penetrate the inner-housing cover and are flanked by slots (16) which likewise penetrate the inner-housing cover, with the result that simplified plug-in/clip assembly is made possible.

7. Air nozzle according to Claims 1 to 6, **characterized in that** the individual parts of the said air nozzle comprise plastic injection-moulded parts and are connected to one another by clip latching.

## Revendications

1. Bouche d'air, notamment pour véhicules automobiles, comprenant des clapets à air (4, 5) à tenons axiaux (19), un élément de couplage (3) pour les clapets à air (4, 5), un boîtier intérieur (2) annulaire présentant un logement pour les tenons axiaux (19) et un boîtier extérieur annulaire (1) recevant le boîtier intérieur (2) de manière à ce qu'il puisse tourner et en le bloquant dans le sens axial, **caractérisée en ce que** les logements pour les tenons axiaux (19) sont réalisés sous la forme de logements d'enfichage à prise par l'arrière (15) disposés sur le boîtier intérieur (2), que le boîtier extérieur (1), pour l'arrangement de fixation sur une paroi de raccordement perforée, présente une bride (7) qui s'appuie du côté extérieur contre la paroi de raccordement et des tenons d'enclipsage (12) évidés dans la gaine annulaire (6), reliés de manière élastique et prenant par l'arrière le bord du trou de la paroi de raccordement, et que le boîtier extérieur (1) est en plus muni d'un collet (8) dirigé vers l'intérieur contre lequel le boîtier intérieur (2) repose d'un côté ainsi que de butées (9) écartables qui, une fois le montage par enfichage effectué, viennent en prise par l'arrière avec le boîtier intérieur (2) et le bloquent dans le sens axial.

2. Bouche d'air selon la revendication 1, **caractérisée en ce que** les clapets à air (4, 5) dont certaines zones se chevauchent forment ensemble un cercle fermé.

3. Bouche d'air selon la revendication 1 ou 2, **caractérisée en ce que** les clapets à air (4, 5) présentent des talons de matière (20) disposés à l'arrière comprenant des logements de support (21) à prise par l'arrière pour le montage par enfichage des tenons (18) disposés sur l'élément de couplage (3).

4. Bouche d'air selon la revendication 3, **caractérisée en ce que** les talons de matière (20) sont à chaque fois réalisés sous forme de fourches et que l'élément de couplage (3) est disposé entre les dents de fourche.

5. Bouche d'air selon au moins l'une des revendications précédentes, **caractérisée en ce que** les orifices d'enfichage à prise par l'arrière (15) formés dans le boîtier intérieur (2), lesquels sont prévus pour un montage par enfichage des tenons axiaux (19) des clapets à air, partent depuis une extrémité axiale du boîtier intérieur (2) et s'étendent sur une zone partielle axiale du boîtier intérieur (2).

6. Bouche d'air selon la revendication 5, **caractérisée en ce que** les orifices d'enfichage (15) reçoivent la gaine du boîtier intérieur et sont accompagnés de fentes (16) recevant elles aussi la gaine du boîtier intérieur, ce qui permet un montage simplifié par clipsage et enfichage.

7. Bouche d'air selon l'une des revendications 1 à 6, **caractérisée en ce que** les pièces individuelles de celle-ci se composent de pièces en matière plastique moulées par injection et sont reliées entre elles par enclipsage.
